# EUROPÄISCHE PATENTANMELDUNG

(11) **EP 0 681 393 A1**
(43) Veröffentlichungstag der Anmeldung: **08.11.1995**
(21) Anmeldenummer: 95101669.0
(22) Anmeldetag: 08.02.1995
(51) Int. Cl.: H04M 11/00

(54) **Telekommunikationseinrichtung**

(30) Priorität: 03.05.1994 DE 4415428
(71) Anmelder: Deutsche Telekom AG, D-53105 Bonn (DE)
(72) Erfinder: Lochschmidt, Bernd, Dr. Ing., D-64395 Bremsbach (DE); Schultheiss, Ulrich, Dr. Ing., D-64289 Darmstadt (DE); Seidelmann, Constanze, Dipl.-Ing. (FH), D-64319 Pfungstadt (DE); Runge, Fred, Dipl.-Ing., D-15838 Wünsdorf (DE); Rossmy, Hartmut, Dipl.-Ing., D-13125 Barlin (DE); Gussner, Max-Michael, Dipl.-Ing. (FH), D-64287 Darmstadt (DE)

(57) **Zusammenfassung**

Eine Telekommunikationseinrichtung (61) zum Anschluß an das Telefonnetz und einen Computer (62) ist in vorteilhafter Weise dadurch als Telefon, Fax-Modem, Daten-Modem und Anrufbeantworter benutzbar, daß eine Schaltmatrix mit mehreren Signaleingängen und mehreren Signalausgängen vorgesehen ist, wobei die Signaleingänge mit den Signalausgängen als Funktion zugeführter Steuersignale wahlweise verbindbar sind, daß ein erster Signaleingang und ein erster Signalausgang über Anpassungsschaltungen mit einem Leitungspaar des Telefonnetzes verbindbar sind, daß ein zweiter Signaleingang und ein zweiter Signalausgang mit den Telefonleitungsanschlüssen eines Modem-Kerns verbunden sind, daß ein dritter Signaleingang mit dem Ausgang eines Mikrofonverstärkers und ein dritter Signalausgang mit dem Eingang eines Lautsprecherverstärkers verbunden ist und daß ein vierter Signaleingang und ein vierter Signalausgang mit einer Freisprechschaltung verbunden sind. Weiterbildungen der Erfindung ermöglichen die Bedienumg mit Hilfe von Spracheingabe und die Benutzung als Anrufbeantworter.

## Beschreibung

Die Erfindung betrifft eine Telekommunikationseinrichtung zum Anschluß an das Telefonnetz und einen Computer.

Zum Übertragen von Daten über Telefonleitungen werden in großem Umfang Modems eingesetzt, welche von einem Computer ausgegebene digitale Signale in trägerfrequente Signale umwandeln, die über Telefonnetze übertragbar sind, und empfangene trägerfrequente Signale in digitale Signale umwandeln. Ferner sind Modems mit Einrichtungen zum Herstellen der jeweiligen Verbindung, insbesondere zum Wählen der gewünschten Rufnummer, ausgerüstet. Dazu erhalten sie zusätzlich zu den zu übertragenden Daten vom Computer Befehle, die weitgehend standardisiert sind, beispielsweise in Form des sogenannten Hayes-Codes. Zur Unterscheidung der Befehle von Daten wird diesen die Buchstabenfolge AT vorangestellt. Deshalb werden Befehle nach diesem Standard auch AT-Befehle genannt. Modems zur Übertragung von Daten werden im folgenden auch Daten-Modems genannt. Zur Faksimile-Übertragung sind ebenfalls Modems bekanntgeworden, die in ähnlicher Weise im Computer erzeugte Faksimile-Daten über Telefonleitungen übertragen. Diese Modems werden im folgenden Fax-Modems genannt. Ferner sind Modems mit Anrufbeantworterfunktion (Voice-Fax-Modems) bekannt.

Es sind ferner eine Einrichtung zum Wählen einer Rufnummer (DE 40 11 339 A1) und eine Einrichtung zum Fernbedienen eines Telefons (DE 41 29 949 A1) bekanntgeworden, bei welchen über die jeweilige Einrichtung eine Verbindung zwischen einem Computer und dem Telefonnetz erfolgt.

Schließlich ist unter dem Namen Teleface eine Einrichtung bekanntgeworden, die sogenannte Mehrwertdienste ermöglicht, das heißt, über das Telefonnetz übertragene Nachrichten, beispielsweise Sprache oder Faksimile, von einem Computer automatisch verarbeiten läßt und den jeweiligen Anrufer (Kunden) wiederum über das Telefonnetz die verarbeiteten Nachrichten zukommenläßt.

Aufgabe der vorliegenden Erfindung ist es, eine Telekommunikationseinrichtung in Form eines Endgerätes vorzuschlagen mit den Funktionalitäten eines Komfort-Telefons, wie Freisprechbetrieb und Wahl von gespeicherten Rufnummern, das außerdem für eine Daten- und Faksimile-Übertragung geeignet ist. Vorzugsweise soll die Telekommunikationseinrichtung vollständig durch sprachliche Kommandos steuerbar sein, wodurch eine Nutzung durch motorisch Behinderte ermöglicht wird.

Diese Aufgabe wird erfindungsgemäß dadurch gelöst, daß eine Schaltmatrix mit mehreren Signaleingängen und mehreren Signalausgängen vorgesehen ist, wobei die Signaleingänge mit den Signalausgängen als Funktion zugeführter Steuersignale wahlweise verbindbar sind, daß ein erster Signaleingang und ein erster Signalausgang über Anpassungsschaltungen mit einem Leitungspaar des Telefonnetzes verbindbar sind, daß ein zweiter Signaleingang und ein zweiter Signalausgang mit den Telefonleitungsanschlüssen eines Modem-Kerns verbunden sind, daß ein dritter Signaleingang mit dem Ausgang eines Mikrofonverstärkers und ein dritter Signalausgang mit dem Eingang eines Lautsprecherverstärkers verbunden ist und daß ein vierter Signaleingang und ein vierter Signalausgang mit einer Freisprechschaltung verbunden sind.

Durch die Verwendung der Schaltmatrix, die als solche auf dem Markt als integrierte Schaltung erhältlich ist, ist eine für die jeweilige Betriebsart erforderliche Leitung von Sprachsignalen oder trägerfrequenten Daten- bzw. Faksimile-Signalen in einfacher Weise möglich. Außerdem zeichnet sich die erfindungsgemäße Telekommunikationseinrichtung dadurch aus, daß Komponenten, die zur Steuerung von beispielsweise Modern-Funktionen erforderlich sind, auch zur Steuerung von anderen Funktionen mitverwendet werden können.

Obwohl es im Rahmen der Erfindung auch möglich ist, eine Schaltmatrix auf digitaler Ebene zu verwenden, ist vorzugsweise vorgesehen, daß die Schaltmatrix zum Schalten von Analogsignalen ausgelegt ist. Dabei ist es vorteilhaft, wenn jeweils ein Signaleingang gleichzeitig mit mehreren Signalausgängen verbindbar ist, um diesem Signaleingang zugeführte Signale auf mehrere Signalausgänge zu verteilen oder wenn die Steuersignale für die Schaltmatrix von einem Microcontroller erzeugt werden, der ferner mit einem Dateneingang des Modem-Kerns und über eine Schnittstelle mit dem Computer verbunden ist.

Zur Übertragung von Daten innerhalb der Telekommunikationseinrichtung ist es vorteilhaft, wenn der Microcontroller, der Modem-Kern und ein Schreib/Lese-Speicher über ein Bus-System miteinander verbunden sind.

Die erfindungsgemäße Telekommunikationseinrichtung kann durch mehrere Eingänge, Ausgänge und weitere Schnittstellen ergänzt werden. Um den Microcontroller von der Steuerung dieser zusätzlichen Komponenten, der Schaltmatrix und der steuerbaren Verstärker im einzelnen zu entlasten, kann gemäß einer Weiterbildung vorgesehen sein, daß der Microcontroller ferner, vorzugsweise über eine Zusatzlogik, mit einem die Steuersignale übertragenden Steuerbus und mit Ein/Ausgängen für Bedienung, Signalisierung und Telemetrie verbunden ist.

Dabei kann vorgesehen sein, daß an den Steuerbus ferner Steuereingänge des Mikrofonverstärkers, des Lautsprecherverstärkers, der Freisprechschaltung und je eines in der Anpassungsschaltung für aus der Telefonleitung empfangene und in die Telefonleitung gesendete Signale enthaltenen steuerbaren Verstärkers angeschlossen sind.

Zum Austausch von Daten mit anderen Geräten und Einrichtungen kann es außerdem zweckmäßig sein, wenn der Microcontroller ferner, vorzugsweise über die Zusatzlogik, mit einer Schnittstelle für ein serielles Bussystem, vorzugsweise ein I²C-Bus, angeschlossen ist.

Die Sprachsteuerung der Telekommunikationseinrichtung kann vorzugsweise dadurch verwirklicht werden, daß eine Spracherkennungseinrichtung vorgesehen ist, deren sprachabhängige Ausgangssignale zur Steuerung der Telekommunikationseinrichtung dienen, insbesondere zur Erzeugung von Wählsignalen und zur Betriebsartenumschaltung. Dazu kann ein vierter Signalausgang der Schaltmatrix mit der Spracherkennungseinrichtung verbunden werden.

Dabei kann die Spracherkennungseinrichtung vorzugsweise als Steckkarte des Computers ausgeführt sein, wobei die Sprachsignale über die Schaltmatrix einem Sprachsignaleingang der Steckkarte zuführbar sind und die Ausgangssignale der Steckkarte unmittelbar im Computer weiterverarbeitet werden. Es ist jedoch auch möglich, innerhalb der Telekommunikationseinrichtung eine Spracherkennungseinrichtung direkt an einen Ausgang der Schaltmatrix anzuschließen und ihre Ausgangssignale dem Microcontroller zuzuführen.

Die erfindungsgemäße Telekommunikationseinrichtung kann auch bei abgeschaltetem Computer als Anrufbeantworter betrieben werden, wenn gemäß der Erfindung ein digitaler Schreib/Lese-Speicher vorgesehen ist, in den in einer Betriebsart als Anrufbeantworter empfangene Sprachsignale in codierter Form einschreibbar sind.

Die Verwendung von bereits erhältlichen Komponenten für den Betrieb als Daten-Modem und als Fax-Modem sowie die Verwendung von üblichen Programmen zur Daten- und Faksimile-Übertragung wird gemäß einer anderen Weiterbildung dadurch ermöglicht, daß über die Schnittstelle vom Computer zum Microcontroller Befehle zur Steuerung für den Betrieb als Daten- oder Fax-Modem und weitere Befehle zur Steuerung der Telekommunikationseinrichtung zum Telefonieren und als Sprach-Ein/Ausgabe-Einheit zuführbar sind.

Eine andere, insbesondere für den Betrieb als Anrufbeantworter vorteilhafte Weiterbildung, besteht darin, daß über die Schnittstelle ferner codierte Sprachsignale zu Zwecken der Speicherung im Computer und der Wiedergabe von im Computer gespeicherten codierten Sprachsignalen durch den Lautsprecher der Telekommunikationseinrichtung übertragbar sind.

Durch eine geeignete Gestaltung von Programmen für den Computer und/oder den Microcontroller kann die erfindungsgemäße Telekommunikationseinrichtung mit vielen zusätzlichen Funktionalitäten versehen werden. So kann beispielsweise durch eine Eingabe über eine besonders gestaltete oder besonders bezeichnete Taste ein Notruf abgegeben werden mit automatischer Anwahl einer oder mehrerer vorgegebenen Rufnummern, wobei eine Ansage eines Notruftextes erfolgt. Ein Einsatz in Nebenstellenanlagen, beispielsweise mit Anrufweiterleitung, ist ebenfalls möglich. Durch eine entsprechende Gestaltung der Anpassungseinrichtungen ist auch ein Anschluß an das ISDN möglich.

Ausführungsbeispiele der Erfindung sind in der Zeichnung anhand mehrerer Figuren dargestellt und in der nachfolgenden Beschreibung näher erläutert. Es zeigt:
- Fig. 1: ein Blockschaltbild eines Ausführungsbeispiels und
- Fig. 2: eine schematische Darstellung des Ausführungsbeispiels zusammen mit einem Computer.

Gleiche Teile sind in den Figuren mit gleichen Bezugszeichen versehen. Die erfindungsgemäße Telekommunikationseinrichtung kann auf verschiedene Weise verwirklicht werden. So können beispielsweise einzelne oder Gruppen der dargestellten Blöcke durch geeignete Schaltungen, insbesondere integrierte Schaltungen, realisiert werden. Bei sehr hohem Integrationsgrad ist es ferner möglich, die gesamte digitale Signalverarbeitung der Telekommunikationseinrichtung in einem integrierten Schaltkreis zu realisieren.

Zur Verteilung der bei der erfindungsgemäßen Telekommunikationseinrichtung auftretenden Analogsignale (Sprachsignale) dient eine Schaltmatrix 1 mit acht Eingängen E1 bis E8 und acht Ausgängen A1 bis A8. Derartige Schaltmatrizen sind auf dem Markt erhältlich und brauchen daher zum Verständnis der Erfindung im einzelnen nicht beschrieben zu werden. Diese Bausteine ermöglichen eine wahlfreie Verbindung der Eingänge mit den Ausgängen in Abhängigkeit von zugeführten Steuersignalen, wozu die Schaltmatrix 1 mit einem Bus-Interface 2 versehen ist, an das ein Steuerbus 3 angeschlossen ist. Mit jeweils einem Eingang können gleichzeitig mehrere Ausgänge der Schaltmatrix 1 verbunden werden, so daß beispielsweise die empfangenen Signale zum Codec 21 zu Zwecken der Verstärkungsregelung und über die Pegelwaage 31 dem Lautsprecherverstärker 25 zugeführt werden können. Falls erforderlich kann die Schaltmatrix auch derart ausgebildet sein, daß Signale mehrerer Eingänge an einem Ausgang summiert werden.

Zur Verbindung mit dem Telefonnetz dienen zwei Anschlüsse 4 und 5, die über eine Leitungsschnittstelle 6, einen Sendeverstärker 7 und einen Empfangsverstärker 8 mit dem Ausgang A1 und dem Eingang E1 verbunden sind. Die Verstärkungsgrade des Sendeverstärkers 7 und des Empfangsverstärkers 8 sind steuerbar ausgebildet, wozu sie ebenfalls an den Steuerbus 3 angeschlossen sind. Die Leitungsschnittstelle hat folgende Funktionen: die galvanische Trennung zum Fernsprechnetz, die Schleifenstromerkennung, Erkennen eines eingehenden Rufsignals, Bilden der Stromschleife mit der Anschlußleitung (Hörer abnehmen), Erzeugen von Wählimpulsen für das Impulswahlverfahren, Gabelschaltung zur Trennung von empfangenen und zu sendenden NF-Signalen, Erdtastenfunktion, 16-kHz-Filter zur Unterdrückung von Gebührenimpulsen, Pegelbegrenzung für das Signal zur Leitung und Überspannungsschutz durch einen VDR. Es entspricht den anwendbaren Vorschriften FTZ 1TR2.

An die Leitungsschnittstelle 6 ist ein Gebührenimpulsdetektor 9 angeschlossen, der die über die Telefonleitungen übertragenen Gebührenimpulse in ein digitales Signal GIMP umwandelt. An den Ausgang der Leitungsschnittstelle für die empfangenen NF-Signale ist ein DTMF-Decoder angeschlossen, der zum Empfangen und Decodieren von ankommenden DTMF-Signalen nach V.19 dient. Im Telefon- und Anrufbeantworterbetrieb können somit über das Telefonnetz eingehende Steuerbefehle ausgewertet werden. Zur zentralen Steuerung der Telekommunikationseinrichtung ist ein Microcontroller 10 vorgesehen, der Zugriff auf verschiedene Speicher hat, beispielsweise einen Nur-Lese-Speicher für Programme, einen Schreib/Lese-Speicher 12 als Arbeitsspeicher und einen elektrisch löschbaren programmierbaren Nur-Lese-Speicher 13 (EEPROM), um veränderliche Daten unverlierbar abzulegen.

Über je einen seriellen Bus ist der Microcontroller 10 mit einer Schnittstelle 14 zum Datenaustausch mit einem Computer, vorzugsweise mit einem Personalcomputer, und mit einem Modem-Kern 15 verbunden. Außerdem ist der Microcontroller 10 an ein Bussystem 16 angeschlossen, das zum Austausch von Daten zwischen dem Microcontroller 10, dem Modem-Kern 15 und einem Meldungsspeicher 17 dient. Zur Entlastung des Microcontrollers 10 und des Bussystems 16 ist an das Bussystem ferner eine Zusatzlogik 18 angeschlossen, die mit einer Vielzahl von weiteren Teilen der Telekommunikationseinrichtung verbunden ist, von denen zunächst nur der Steuerbus 3, der Gebührenimpulsdetektor 9 und der DTMF-Dekoder 9' genannt werden.

Die Stromversorgung des Meldungsspeichers 17 wird von einem Akkumulator 19 gepuffert, so daß bei Abschalten der Telekommunikationseinrichtung kein Datenverlust auftritt. Die Kapazität des Meldungsspeichers ist derart gewählt, daß codierte Sprachsignale mit der Dauer von einigen Minuten gespeichert werden können - beispielsweise vier Minuten.

Der Modem-Kern 15 besteht im wesentlichen aus einem Codec 21, der mit dem Eingang E2 und dem Ausgang A2 der Schaltmatrix 1 verbunden ist. Die Codierung der über den Ausgang A2 zugeführten Sprachsignale und die Codierung der dem Eingang E2 zuzuführenden Sprachsignale erfolgt nach dem GSM-Standard (Global System for Mobil Communikations) und ermöglicht eine komprimierte Speicherung der codierten Sprachsignale. Vom bzw. zum Codec 21 werden die codierten Sprachsignale über einem digitalen Signalprozessor 22 und eine V32-Schnittstelle 23 dem Bussystem 16 zugeführt bzw. entnommen.

An den Ausgang A8 der Schaltmatrix 1 ist der Eingang eines Verstärkers 25 für einen Lautsprecher 26 angeschlossen, der ferner über eine Summierschaltung 27 und einen Ruftongenerator 28 zur Wiedergabe eines Ruftons dient. Ein Steuereingang des Verstärkers 25 ist an den Steuerbus 3 zur Steuerung der Lautstärke angeschlossen. Der Eingang E3 der Schaltmatrix 1 ist mit dem Ausgang eines Mikrofonverstärkers 29 verbunden. Anstelle des eingebauten Mikrofons 30 kann über eine Schaltklinke ein externes Mikrofon angeschlossen werden, ebenso kann der Lautsprecher 26 durch einen externen Lautsprecher ersetzt werden. Die Verstärker 25, 29, das Mikrofon 30 und der Lautsprecher 26 bilden eine Freisprecheinrichtung, wobei zur Vermeidung einer akustischen Rückkoppelung eine Freisprechschaltung, eine sogenannte Pegelwaage, vorgesehen ist, welche das Mikrofonsignal erhält und außerdem an die Eingänge E6 und E8 und an den Ausgang A6 der Schaltmatrix 1 angeschlossen ist. Über den Steuerbus 3 können verschiedene Dämpfungscharakteristiken der Pegelwaage 31 eingestellt werden. Als Pegelwaage eignet sich beispielsweise der integrierte Schaltkreis mit der Typenbezeichnung PSB45030 der Firma Siemens.

Die Zusatzlogik 18 weist verschiedene Eingänge und Ausgänge 35, 36 zu Telemetriezwecken auf. Dadurch ist die Eingabe von Kommandos durch externe Sensoren sowie eine Ausgabe von Signalen möglich. Eine Schnittstelle für einen I²C-Bus ermöglicht den Anschluß verschiedener elektronischer Geräte, die mit Hilfe eines derartigen Busses steuerbar sind.

Ferner wird über die Zusatzlogik 18 eine Signalisierung 38 angesteuert, die beispielsweise aus einigen Leuchtdioden besteht. Damit können verschiedene Betriebszustände angezeigt werden, beispielsweise, daß die Telekommunikationseinrichtung derzeit mit dem Telefonnetz verbunden ist. Bedienelemente 39 sind ebenfalls an die Zusatzlogik 18 angeschlossen. Außerdem kann die externe Erzeugung eines Rufsignals über einen Ausgang 40 gesteuert werden.

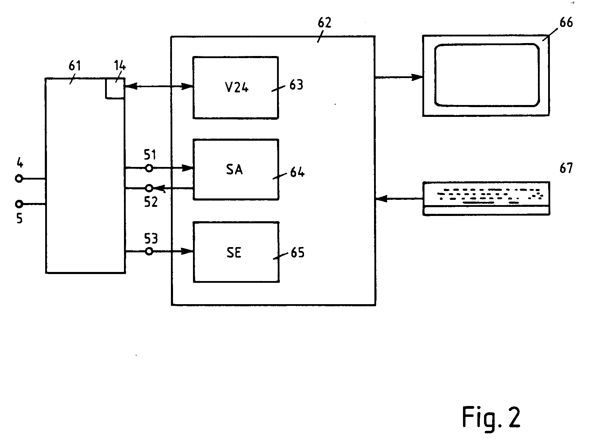

Bei dem Ausführungsbeispiel nach Fig. 2 sind ferner sieben Ein- und Ausgänge der Schaltmatrix 1 über Anpassungsverstärker 41 bis 47 mit Ein- bzw. Ausgängen 51 bis 57 der Telekommunikationseinrichtung verbunden. Der Ausgang 51 und der Eingang 52 sind zur Verbindung mit einer Sprachausgabekarte des an die Schnittstelle 14 angeschlossenen Computers vorgesehen. Eine vorteilhafte Anwendung dieser Sprachausgabekarte besteht in einer akustischen Bedienerführung, insbesondere dann, wenn eine an den Ausgang 53 angeschlossene Spracherkennungskarte Spracheingaben zuläßt. Diese Ausführungsform ist insbesondere für motorisch Behinderte geeignet und erlaubt diesen Personen eine Benutzung der Telekommunikationseinrichtung in einfacher Weise.

Weitere Eingänge 54, 56 und Ausgänge 55, 57 sind zum Anschluß einer weiteren nicht dargestellten Freisprechschaltung vorgesehen, die mit größerem Aufwand als die Pegelwaage 31 Rückkoppelungen durch Kompensation der Raumechos und der Leitungsechos vermeidet.

Die erfindungsgemäße Telekommunikationseinrichtung kann in verschiedenen Betriebszuständen betrieben werden und wird dazu über die Schnittstelle 14 vom Computer gesteuert. Diese Steuerung erfolgt anhand von Befehlssätzen, vorzugsweise solchen, die auch zur Steuerung von Modems verwendet werden, insbesondere dem sogenannten Hayes-Befehlssatz. Die Befehle werden in dem Microcontroller 10 interpretiert und in einzelne Steuerbefehle für die erfindungsgemäße Telekommunikationseinrichtung umgesetzt, beispielsweise zur Steuerung der Schaltmatrix 1. Dazu ist der Befehlssatz über demjenigen, der zur Steuerung des Modems erforderlich ist, wesentlich erweitert. Die Schnittstelle 14 kann außer zur Übertragung dieser Befehle und gegebenenfalls dazugehöriger Rückmeldungen zur Übertragung weiterer Daten genutzt werden, beispielsweise zur Aufzeichnung der codierten Sprachsignale, wenn der Meldungsspeicher 17 gefüllt ist.

Im folgenden werden die verschiedenen möglichen Betriebsarten der Telekommunikationseinrichtung beschrieben.

Bei der Benutzung als Telefon werden vom Computer nach einem Befehl, als Telefon eine Verbindung aufzubauen, Daten zugeführt, welche die zu wählende Rufnummer kennzeichnen. Vom Microcontroller 10 wird die Leitungsschnittstelle 6 zur Abgabe der Wählimpulse angesteuert. Ferner wird vom Microcontroller 10 über die Zusatzlogik 18 und den Steuerbus 3 die Schaltmatrix derart angesteuert, daß folgende Verbindungen entstehen E1-A6, E8-A8, E6-A1. Im Falle eines Multifrequenzwahlverfahrens erfolgt die Erzeugung der Wählsignale - vom Microcontroller 10 gesteuert - durch den Modem-Kern 15, wozu E2 mit A1 vorübergehend verbunden wird. Die Gebühren können im Falle einer Freischaltung der Gebührenimpulse dadurch gezählt werden, daß die Impulse GIMP über die Zusatzlogik 18 dem Microcontroller 10 zugeführt, dort gezählt und dann über die Schnittstelle 14 dem Computer mitgeteilt werden.

Ein Betrieb als Anrufbeantworter wird dadurch möglich, daß der Microcontroller 10 bei entsprechender Einstellung durch geeignete Eingaben über die Eingabeeinheit 39 oder durch Befehle des Computers über die Verbindungsleitung zur Leitungsschnittstelle 6 und den Fort IO das Eintreffen eines Anrufs erkennt und ebenfalls über die Leitungsschnittstelle 6 die Leitung belegt. Gleichzeitig wird A1 mit E2 und E1 mit A2 verbunden, so daß danach eintreffende Sprachsignale zum Codec 21 gelangen. Die codierten Sprachsignale werden dann in dem Meldungsspeicher 17 abgelegt. Sollten länger als vier Minuten Sprachsignale eintreffen, erfolgt eine Ablage der Sprachsignale im angeschlossenen Computer. Außerdem wird angezeigt, daß ein Gespräch eingetroffen ist. Dieses kann beispielsweise auf dem Bildschirm des Computers erfolgen.

Vom Microcontroller 10 wird ferner eine Trennung von der Amtsleitung spätestens nach einer vorgegebenen Zeit sichergestellt. Je nach Programmierung des Microcontrollers 10 im einzelnen können auch weitere Anrufbeantworterfunktionen realisiert werden, wie beispielsweise Fernabfrage und Telemetriefunktionen, das heißt, durch Eingabe von Signalen mit verschiedenen Frequenzen über das Telefonnetz können über den Microcontroller, gegebenenfalls über den Computer, beliebige Befehle an externe Einrichtungen weitergegeben werden. So können beispielsweise die Ausgänge 35, 36 zum ferngesteuerten Einschalten einer Beleuchtungsanlage verwendet werden.

Bei der Benutzung der erfindungsgemäßen Telekommunikationseinrichtung als Daten-Modem oder als Fax-Modem wird in an sich bekannter Weise über A1-E2 und E1-A2 der Codec 21 mit den Amtsleitungen verbunden. Der Wählvorgang erfolgt, wie oben beschrieben, entweder nach dem Impulswahl- oder nach dem Mehrfrequenzwahl-Verfahren. Die zu sendenden Daten werden vom Computer über die Schnittstelle 14 und den Microcontroller 10 dem Modem-Kern 15 zugeführt. Beim Empfang von Daten in den Betriebsarten Daten-Modem oder Fax-Modem können im Meldungsspeicher 17 empfangene Daten zwischengespeichert werden - beispielsweise für den Fall, daß der Computer abgeschaltet ist.

Für eine bedienergeführte Bedienung der erfindungsgemäßen Telekommunikationseinrichtung mittels Spracheingabe wird das Mikrofon 30 über den Mikronfonverstärker 29 und über E3-A3 der Schaltmatrix 1 mit der Spracheingabekarte im Computer verbunden. Die Ausgabe von Anweisungen erfolgt von einer Sprachausgabekarte des Computers über den Eingang 52, den Verstärker 42, E7-E8 der Schaltmatrix 1, den Verstärker 25 und den Lautsprecher 26. Dadurch kann beispielsweise per Spracheingabe die erfindungsgemäße Telekommunikationseinrichtung in die Betriebsart Telefon geschaltet werden, mit einer weiteren Spracheingabe zum "Abheben" und dann zum Wählen einer Rufnummer durch Eingabe über das Mikrofon 30 veranlaßt werden.

Durch den wahlweisen Betrieb als Telefon, als Daten-Modem oder als Fax-Modem und durch die Spracheingabe werden Behinderten vielfältige Möglichkeiten der Sprach- und Datenkommunikation geboten. So ist beispielsweise mit der erfindungsgemäßen Telekommunikationseinrichtung auch die Benutzung von Datex-J möglich. Hierbei können durch ein entsprechend gestaltetes Programm im Computer wesentliche Bedienungsvereinfachungen für die Ausschöpfung der durch Datex-J gegebenen Möglichkeiten geschaffen werden. So kann beispielsweise durch geeignete Befehlsfolgen (Makros) eine einfache Benutzung des unter Datex-J verfügbaren elektronischen Telefonbuches erfolgen.

Der Benutzer hat dann lediglich durch Eingabe eines (wie bei allen anderen Eingaben zuvor trainierten) Befehlswortes den Computer zu veranlassen, den Datex-J-Dienst anzuwählen, dort die Eingabeseite für das elektronische Telefonbuch aufzurufen und zu warten, bis der Benutzer per Spracheingabe Ort und Namen des gewünschten Teilnehmers eingegeben hat.

Dieses wird über die Spracherkennungskarte in für den Datex-J-Dienst verständliche Zeichen umgewandelt, worauf die Telefonnummer des gewünschten Teilnehmers auf dem Bildschirm erscheint. Als weitere Bedienerleichterung kann diese Telefonnummer zwischengespeichert werden, so daß der Bediener durch eine weitere Spracheingabe - beispielsweise des Wortes Wählen - ein Wählen der zwischengespeicherten Telefonnummer veranlassen kann.

Die Regelung der Verstärkung des Empfangsverstärkers 8 erfolgt durch den Microcontroller 10, wobei Signale des Modem-Kerns 15 als Maß für die Amplitude des empfangenen Signals verwendet werden. Einzelheiten der Steuerung bzw. Regelung können über entsprechende Befehle vom Mikrocomputer über die Schnittstelle 14 dem Microcontroller zugeführt werden. Insbesondere kann bei einer Regelung vorgesehen sein, daß zu Beginn eines Telefongesprächs das gewünschte Lautstärkeniveau relativ schnell erreicht wird, während im weiteren Verlauf des Gesprächs die Regelung sehr träge wird, damit in Gesprächspausen kein unnötiges Aufregeln des Verstärkers erfolgt, jedoch leiser gewordene Sprache allmählich an das Lautstärkeniveau angepaßt wird. Über AT-Befehle können vom Computer Größen, wie beispielsweise die eingestellte Verstärkung und die gemessene Amplitude der Sprachsignale abgefragt werden.

Die einzelnen einstellbaren Größen, wie beispielsweise der Zustand der Schaltmatrix 1 und die Verstärkungsgrade können jeweils für die verschiedenen Betriebsarten gespeichert werden, so daß beim Umschalten beispielsweise vom Modem- auf Telefonbetrieb die jeweils vorgegebenen Werte dieser Größen automatisch eingestellt werden. Es können auch mehrere solcher Datensätze gespeichert werden, beispielsweise für jeden vorgesehenen Benutzer.

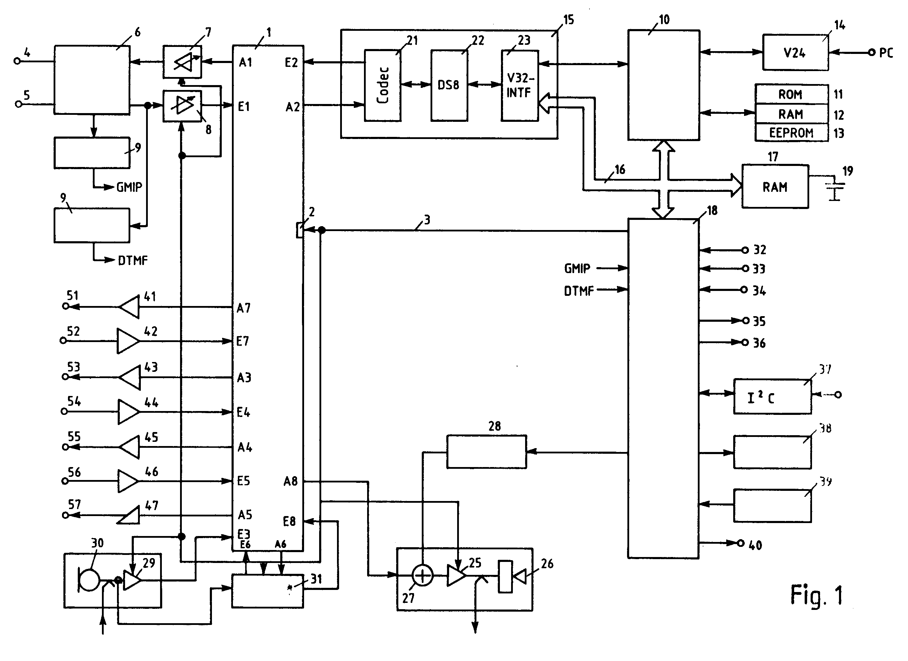

Fig. 2 zeigt eine erfindungsgemäße Telekommunikationseinrichtung 61, die an einen Computer 62 angeschlossen ist. Der Computer kann an sich ein üblicher Personalcomputer sein, der mit einer Schnittstellenkarte 63, einer Sprachausgabekarte 64 und einer Spracherkennungskarte 65 versehen ist. Die Verbindung mit der Telekommunikationseinrichtung erfolgt über die Schnittstelle 14 und die Ein- bzw. Ausgänge 51 bis 53, die im Zusammenhang mit Fig. 1 beschrieben wurden. An den Computer 62 ist ein Bildschirm 66 angeschlossen, der als Flachbildschirm ausgebildet sein kann. Über eine Tastatur 67 können zusätzliche Eingaben erfolgen.

Insbesondere wegen der Eigenschaft der erfindungsgemäßen Telekommunikationseinrichtung als Telefon sollten sowohl die Telekommunikationseinrichtung 61 als auch der Computer 62 für einen Dauerbetrieb ausgelegt sein, das heißt, eine möglichst geringe Leistungsaufnahme und einen Schaltpegel aufweisen, der auch in Wohn- und Schlafräumen nicht stört.

## Patentansprüche

1. Telekommunikationseinrichtung zum Anschluß an das Telefonnetz und einen Computer, dadurch gekennzeichnet, daß eine Schaltmatrix (1) mit mehreren Signaleingängen und mehreren Signalausgängen vorgesehen ist, wobei die Signaleingänge mit den Signalausgängen als Funktion zugeführter Steuersignale wahlweise verbindbar sind, daß ein erster Signaleingang und ein erster Signalausgang über Anpassungsschaltungen (6, 7, 8) mit einem Leitungspaar des Telefonnetzes verbindbar sind, daß ein zweiter Signaleingang und ein zweiter Signalausgang mit den Telefonleitungsanschlüssen eines Modem-Kerns (15) verbunden sind, daß ein dritter Signaleingang mit dem Ausgang eines Mikrofonverstärkers (29) und ein dritter Signalausgang mit dem Eingang eines Lautsprecherverstärkers (25) verbunden ist und daß ein vierter Signaleingang und ein vierter Signalausgang mit einer Freisprechschaltung (31) verbunden sind.

2. Telekommunikationseinrichtung nach Anspruch 1, dadurch gekennzeichnet, daß die Schaltmatrix (1) zum Schalten von Analogsignalen ausgelegt ist.

3. Telekommunikationseinrichtung nach Anspruch 2, dadurch gekennzeichnet, daß jeweils ein Signaleingang gleichzeitig mit mehreren Signalausgängen verbindbar ist, um diesem Signaleingang zugeführte Signale auf mehrere Signalausgänge zu verteilen.

4. Telekommunikationseinrichtung nach einem der vorhergehenden Ansprüche, dadurch gekennzeichnet, daß die Steuersignale für die Schaltmatrix (1) von einem Microcontroller (10) erzeugt werden, der ferner mit einem Dateneingang des Modem-Kerns (15) und über eine Schnittstelle mit dem Computer (62) verbunden ist.

5. Telekommunikationseinrichtung nach Anspruch 4, dadurch gekennzeichnet, daß der Microcontroller (10), der Modem-Kern (15) und ein Schreib/Lese-Speicher (17) über ein Bus-System (16) miteinander verbunden sind.

6. Telekommunikationseinrichtung nach Anspruch 5, dadurch gekennzeichnet, daß der Microcontroller (10) ferner, vorzugsweise über eine Zusatzlogik (18), mit einem die Steuersignale übertragenden Steuerbus (3) und mit Ein/Ausgängen (32 bis 40) für Bedienung, Signalisierung und Telemetrie verbunden ist.

7. Telekommunikationseinrichtung nach Anspruch 5 oder 6, dadurch gekennzeichnet, daß an den Steuerbus (3) ferner Steuereingänge des Mikrofonverstärkers (29), des Lautsprecherverstärkers (25), der Freisprechschaltung (31) und je eines in der Anpassungsschaltung für aus der Leitung empfangene und in die Telefonleitung gesendete Signale enthaltenen steuerbaren Verstärkers (8) angeschlossen sind.

8. Telekommunikationseinrichtung nach Anspruch 7, dadurch gekennzeichnet, daß der Microcontroller (10) ferner, vorzugsweise über die Zusatzlogik (18), mit einer Schnittstelle (37) für ein serielles Bussystem, vorzugsweise ein I²C-Bus, angeschlossen ist.

9. Telekommunikationseinrichtung nach einem der vorhergehenden Ansprüche, dadurch gekennzeichnet, daß eine Spracherkennungseinrichtung (65) vorgesehen ist, deren sprachabhängige Ausgangssignale zur Steuerung der Telekommunikationseinrichtung (61) dienen, insbesondere zur Erzeugung von Wählsignalen und zur Betriebsartenumschaltung.

10. Telekommunikationseinrichtung nach Anspruch 9, dadurch gekennzeichnet, daß ein vierter Signalausgang der Schaltmatrix mit der Spracherkennungseinrichtung (65) verbindbar ist.

11. Telekommunikationseinrichtung nach einem der vorhergehenden Ansprüche, gekennzeichnet durch einen Schreib/Lese-Speicher (17), in den in einer Betriebsart als Anrufbeantworter empfangene Sprachsignale in codierter Form einschreibbar sind.

12. Telekommunikationseinrichtung nach einem der Ansprüche 4 bis 11, dadurch gekennzeichnet, daß über die Schnittstelle (14) vom Computer (62) zum Microcontroller (10) Befehle zur Steuerung für den Betrieb als Daten- oder Fax-Modem und weitere Befehle zur Steuerung der Telekommunikationseinrichtung (61) zum Telefonieren und als Sprach-Ein/Ausgabe-Einheit zuführbar sind.

13. Telekommunikationseinrichtung nach Anspruch 12, dadurch gekennzeichnet, daß über die Schnittstelle (14) ferner codierte Sprachsignale zu Zwecken der Speicherung im Computer (62) und der Wiedergabe von im Computer (62) gespeicherten codierten Sprachsignalen durch den Lautsprecher (26) der Telekommunikationseinrichtung (61) übertragbar sind.
